# EUROPEAN PATENT APPLICATION

(11) **EP 4 691 839 A1**
(43) Date of publication of application: **11.02.2026**
(21) Application number: 24806305.9
(22) Date of filing: 24.04.2024
(51) Int. Cl.: B60L 53/30, B60L 53/66

(54) **CHARGING STATION, WHEEL-TYPE POWER TOOL, AND GATEWAY DEVICE**

(30) Priority: 16.05.2023 CN 202310573776
(71) Applicant: Nanjing Chervon Industry Co., Ltd., Nanjing, Jiangsu 211106 (CN)
(72) Inventor: AN, Keyao, Nanjing, Jiangsu 211106 (CN); WU, Di, Nanjing, Jiangsu 211106 (CN); XU, Zhiwei, Nanjing, Jiangsu 211106 (CN); FANG, Xiong, Nanjing, Jiangsu 211106 (CN); MIAO, Libin, Nanjing, Jiangsu 211106 (CN)
(74) Representative: Sun, Yiming
(86) International application number: PCT/CN2024/089437
(87) International publication number: WO 2024/234949

(57) **Abstract**

Provided are a charging station, a wheeled power tool, and a gateway device. The charging station includes a charging station body including a housing and a bus interface disposed on the housing. The charging station further includes a gateway device with a wired connection and/or a wireless connection to the charging station body. The charging station performs data interaction with a power tool through the gateway device and/or the bus interface; and the charging station performs data interaction with a cloud server through the gateway device.

## Description

This application claims priority to Chinese Patent Application No. 202310573776.1 filed with the China National Intellectual Property Administration (CNIPA) on May 16, 2023, the disclosure of which is incorporated herein by reference in its entirety.

### TECHNICAL FIELD

The present application relates to the technical field of the Internet of things and, in particular, to a charging station, a wheeled power tool, and a gateway device.

### BACKGROUND

In the industry of power tools, many different types of tools or charging devices or adapters may form a small tool system. For example, with a charging station as the center of a system, any power tools that can be charged by the charging station in a tool warehouse belong to the same tool system. Alternatively, a series of garden tools may form a tool system. In a different tool system, all associated power tools or devices have the requirement for data interaction with each other.

This part provides background information related to the present application, and the background information is not necessarily the existing art.

### SUMMARY

An object of the present application is to solve or at least alleviate part or all of the preceding problems. Therefore, an object of the present application is to provide a charging station or a wheeled power tool with a gateway function.

To achieve the preceding object, the present application adopts the technical solutions below.

A charging station includes a charging station body including a housing and a bus interface disposed on the housing. The charging station further includes a gateway device with a wired connection and/or a wireless connection to the charging station body. The charging station performs data interaction with a power tool through the gateway device and/or the bus interface; and the charging station performs data interaction with a cloud server through the gateway device.

In an example, the gateway device is disposed outside the charging station body.

In an example, the gateway device is built into the charging station body.

In an example, the wired connection includes a USB Type-C connection.

In an example, the wireless connection includes at least one of a Bluetooth connection, a cellular network connection, a local area network connection, or a Wi-Fi connection.

In an example, data interaction between the gateway device and the power tool is implemented through at least one communication network of Bluetooth, a cellular network, a local area network, or Wi-Fi.

In an example, the gateway device is charged by the charging station.

In an example, the charging station body includes a gateway interface configured to connect the gateway device.

In an example, the gateway interface is disposed at the front end, the rear end, the upper end, the lower end, the left end, or the right end of the charging station body.

In an example, the charging station body further includes an interface guard cover coverable to hide the gateway interface.

In an example, the charging station body is provided with a display interface capable of displaying at least a connection state between the gateway device and the charging station body.

In an example, the charging station body is fixed to a fixing surface through a mounting interface, and the gateway interface is coplanar with the mounting interface.

In an example, output power of the charging station is greater than or equal to 1600 W.

A wheeled power tool includes a tool body; a walking wheel group configured to support the tool body; a walking electric motor configured to drive the walking wheel group to walk; an energy storage device mounted to the tool body and configured to supply electrical energy to at least the walking electric motor; and a gateway device. The tool body has a wired connection and/or a wireless connection to the gateway device. The wheeled power tool performs data interaction with a power tool through the gateway device; and the wheeled power tool performs data interaction with a cloud server through the gateway device.

In an example, the gateway device is powered by the energy storage device.

In an example, the gateway device is built into the tool body.

In an example, the gateway device is disposed outside the tool body.

In an example, the gateway device is detachably and externally connected to the tool body.

In an example, the gateway device supports at least one of a Bluetooth communication protocol, a cellular network communication protocol, a local area network communication protocol, or a Wi-Fi communication protocol.

In an example, the tool body is provided with a gateway interface configured to connect the gateway device.

In an example, the gateway interface is disposed on the tool body.

In an example, an interface guard cover is further provided at the gateway interface, and the interface guard cover is coverable to hide the gateway interface.

A riding mower includes a machine body; a seat mounted to the machine body; a walking wheel group including walking wheels for supporting the machine body; a walking electric motor for driving the walking wheels to rotate; a mowing assembly including a mowing element for mowing; a driving electric motor for driving the mowing assembly to mow grass; an energy storage device mounted to the machine body and configured to supply power to the walking electric motor and/or the driving electric motor; and a gateway device. The machine body has a wired connection and/or a wireless connection to the gateway device. The riding mower performs data interaction with a power tool through the gateway device; and the riding mower performs data interaction with a cloud server through the gateway device. The gateway device supports at least one of a Bluetooth communication protocol, a cellular network communication protocol, a local area network communication protocol, or a Wi-Fi communication protocol.

In an example, the gateway device is exposed out of the machine body.

In an example, the gateway device is built into the machine body.

In an example, the gateway device is mounted below the seat.

In an example, the energy storage device is configured to supply electrical energy to the gateway device.

In an example, the wired connection includes a USB Type-C connection.

A gateway device applicable to a power tool system is provided, where the power tool system includes a power tool or a cloud server, and the gateway device includes a housing; a data transmission unit disposed in the housing; and a battery unit disposed in the housing to supply power to the data transmission unit. The gateway device performs, through the data transmission unit, data interaction with at least the power tool in a wireless manner and/or a wired manner and data interaction with the cloud server in a wireless manner. The gateway device is capable of adaptively adjusting a data transmission speed according to a relevant parameter of the power tool.

In an example, a data transmission rate of the gateway device is greater than or equal to 2 kbps and less than or equal to 200 Mbps.

In an example, a wired connection includes at least one of a USB Type-C connection or a bus connection.

In an example, a wireless connection implements data interaction through at least one communication network of Bluetooth, a cellular network, a local area network, or Wi-Fi.

In an example, a data transmission rate over the cellular network is greater than or equal to 50 Mbps and less than or equal to 150 Mbps.

In an example, a data transmission rate through Bluetooth is greater than or equal to 1 kbps and less than or equal to 10 kbps.

In an example, a data transmission rate over the local area network is greater than or equal to 100 Mbps and less than or equal to 150 Mbps.

A power tool system includes multiple power tools and a cloud server. The power tool system further includes a gateway device mounted to any power tool of the multiple power tools, where the gateway device has a wired connection or a wireless connection to the power tool with the gateway device mounted. The power tool with the gateway device mounted performs data interaction with another power tool in the tool system through the gateway device; and the power tool with the gateway device mounted performs data interaction with the cloud server through the gateway device.

In an example, the power tool system further includes a charging station with the gateway device mounted.

### BRIEF DESCRIPTION OF DRAWINGS

FIG. 1 is a schematic view of a power tool system according to an example of the present application.
FIG. 2 is a schematic view of a power tool system according to another example of the present application.
FIG. 3 is a structural view of a charging station in FIG. 1.
FIG. 4 is a structural view of a riding mower in FIG. 2.
FIG. 5 is a structural view of a gateway device in FIGS. 1 to 4.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

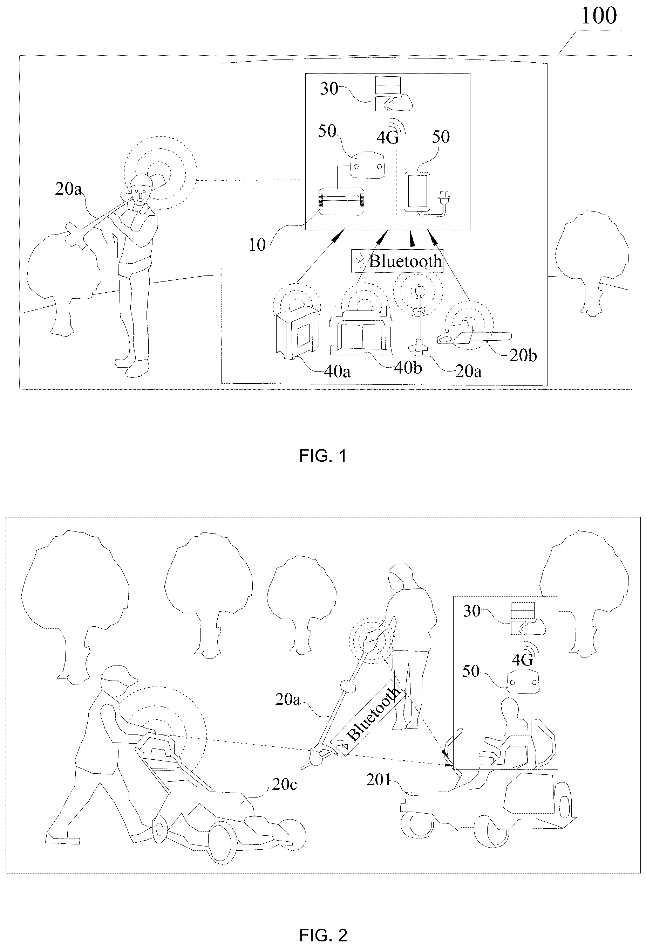

As shown in FIG. 1, a power tool system 100 may include a charging station 10, a power tool 20, and a cloud server 30. The power tool 20 includes a string trimmer 20a and a hedge trimmer 20b. Of course, other types of power tools may also be included, which are not exhausted here. The power tool system 100 may further include an energy device 40, such as a battery pack 40a or a power supply device 40b. In this example, the power tool system 100 further includes a gateway device 50, such as a 4G gateway 50a or a mobile phone gateway 50b. In other examples, the gateway device 50 may be a Bluetooth gateway, a Wi-Fi gateway, a wireless local area network gateway, or the like. In some other examples, the power tool system 100 includes at least the gateway device 50 and further includes at least one of the charging station 10, the power tool 20, the cloud server 30, or the energy device 40. For example, multiple power tools 20 and the gateway device 50 can form a tool system, the gateway device 50 and the charging station 10 can form a tool system, the gateway device 50 and the energy device 40 can form a tool system, or the gateway device 50, the charging station 10, and at least one power tool 20 can form a tool system. For example, FIG. 2 shows a power tool system composed of a riding mower 201 equipped with the gateway device 50, the string trimmer 20a, and a push mower 20c in the field of garden tools.

In this example, the power tool 20, the charging station 10, and the gateway device 50 in the same power tool system may be located in the same tool storage warehouse, in the same working scene or working region, or at any site within a communication range of the gateway device 50.

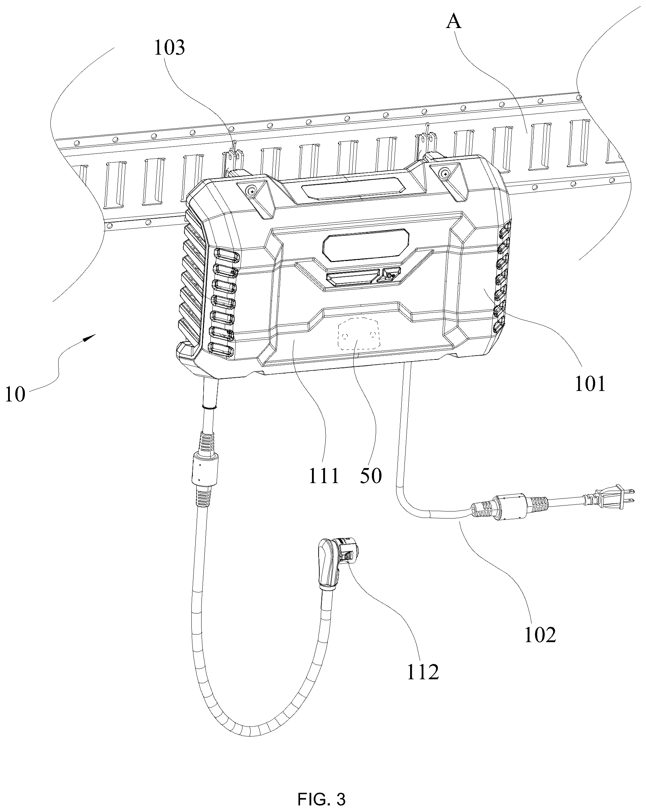

As shown in FIG. 3, the charging station 10 includes a charging station body 101, a charging cable 102, and a mounting interface 103. The charging station body 101 includes a housing 111, a bus interface 112, and the gateway device 50. The charging station 10 is detachably mounted on a mounting surface A through the mounting interface 103, where the mounting surface A may be a bracket or a wall surface in a warehouse. One end of the charging cable 102 is fixed to the charging station body 101, and the other end of the charging cable 102 is connected to alternating current mains electricity.

In this example, the charging station 10 may charge battery packs for different types of power tools. In this example, the charging station 10 may provide charging power of greater than or equal to 1600 W. Alternatively, the charging station may provide charging power of greater than or equal to 800 W or charging power of greater than or equal to 1000 W.

The charging station 10 is provided with the gateway device 50, and the gateway device 50 may be connected to the charging station 10 in a wired manner or a wireless manner. Alternatively, the gateway device 50 has both a wired connection manner and a wireless connection manner to be connected to the charging station 10, and a user may select an appropriate connection manner to connect the gateway device 50 to the charging station 10 according to actual requirements. In an example, the gateway device 50 may be built into the charging station 10, for example, built into an accommodation space formed by the housing 111. It is to be understood that the gateway device 50 built in the charging station 10 may correspond to an interface on the housing 111, where the gateway device 50 can be connected to the outside through the interface. In an example, the gateway device 50 may be detachably and externally connected to the charging station body 101, which may include an electrical connection and a structural connection. For example, the gateway device 50 may be externally connected to the housing 111 through a snap, a screw, or an adhesive.

In this example, regardless of whether the gateway device 50 is built in the housing 111 or disposed outside the charging station body 101, the gateway device 50 may be electrically connected to the charging station 10 in a wired manner, a wireless manner, or both the wired manner and the wireless manner. The wired connection manner between the gateway device 50 and the charging station 10 may include at least a USB Type-C connection or another wired connection manner. The wireless connection manner between the gateway device 50 and the charging station 10 may include at least one wireless connection manner of Bluetooth, a cellular network, a local area network, or Wi-Fi. In this example, the cellular network may be a 4G network, a 5G network, or a 6G network. A coverage range of the local area network may be set according to actual requirements, for example, may be the coverage of a warehouse.

For example, the charging station 10 is provided with a gateway interface 113 for the gateway device 50, and the gateway interface 113 may be a wired interface or a wireless interface or may include both the wired interface and the wireless interface. The gateway interface 113 may be disposed at a position of the charging station body 101 that facilitates the viewing of the user or the plugging and unplugging of a connection cable, for example, at the front end, rear end, upper end, lower end, left end, or right end of the charging station body 101. Alternatively, multiple gateway interfaces 113 are provided at different positions. In an example, a form of the gateway interface 113 is related to a communication manner supported by the gateway device 50. If the gateway device 50 supports wireless communication, the gateway interface 113 may not be disposed, and the gateway device 50 is connected to the charging station 10 in the wireless manner. If the gateway device 50 supports wired communication, the gateway interface 113 may be an interface matching an interface of the connection cable of the gateway device 50.

In an example, the charging station 10 is further provided with an interface guard cover 104 configured to be covered on the gateway interface 113 when the gateway interface 113 is not connected to the gateway device 50, so as to implement dust-proof and waterproof functions. In this example, the gateway interface 113 and the mounting interface 103 are provided, for example, the mounting interface 103 is generally disposed on the back side, that is, the rear end of the charging station 10, and the gateway interface 113 may be disposed on another end face other than the rear end so that the gateway interface 113 is prevented from being blocked after the charging station 10 is mounted on the mounting surface A.

In this example, the gateway device 50 may be charged by the charging station 10. For example, the connection cable for the wired connection between the gateway device 50 and the charging station 10 may also transmit power supplied to the gateway device 50. In other examples, the gateway device 50 itself may include a built-in battery to satisfy its own power consumption requirement, such as a button battery.

In this example, the charging station body 101 may be further provided with a display interface configured to display at least a connection state between the charging station 10 and the gateway device 50 or display device information of all power tools 20 or energy devices 40 connected to the charging station 10 through the gateway device 50. In an example, the display interface may include an interactive terminal configured for the user to selectively view information about a selected device. For example, the user may actively search on the display interface for current location information of a power tool capable of data interaction with the charging station 10 through the gateway device 50. In an example, the display interface may be disposed at the front end of the charging station body 101. In other examples, users may set, according to their own requirements, contents displayable on the display interface.

In this example, the charging station 10 may communicate, through the gateway device 50, with a device such as the power tool 20 or a battery pack that can communicate with the gateway device 50 within a certain communication range. In this example, the charging station 10 may perform, through the bus interface 112, data interaction with the power tool 20, the energy device 40, or another device connected to the bus interface 112. Alternatively, the charging station 10 may simultaneously perform data interaction with different power tools 20 or energy devices 30 through the gateway device 50 and the bus interface 112. In this example, the charging station 10 may perform data interaction with the cloud server 30 through the gateway device 50.

The data interaction may include transmission of uplink data and reception of downlink data. That is to say, the charging station 10 can send data to the power tool 20 or the energy device 40 downlink of a communication link and can receive data fed back by the power tool 20 or the energy device 40. In this example, the charging station 10 may acquire, through the gateway device 50, a tool parameter of the power tool 20, where the tool parameter may include identifier information, location information, configuration information, power information, and a working log of the tool and a historical working parameter of the power tool, such as working efficiency and a rated current or voltage. The charging station 10 may also deliver current station information of the charging station 10 through the gateway device 50, such as a current idle state, information about a device being charged, a remaining charging time, the number of charging interfaces, and the number of usable charging interfaces of the charging station 10.

In an example, the charging station 10 may perform data interaction with the cloud server 30 through the gateway device 50, for example, may transmit the received data of the power tool 20 or the energy device 40 to the cloud for backup or send a device upgrade file delivered by the cloud server 30 to the corresponding power tool 20 or energy device 40. In some examples, the cloud server 30 may perform, according to information uploaded by the charging station 10, unified management on all tool devices capable of communicating with the charging station 10 or all tool devices of the same type, for example, perform a unified upgrade on power tools of the same type.

In some examples, the charging station 10 may serve as an intermediate node and enables, through the gateway device 50, data interaction between two electric devices that cannot directly communicate with each other. For example, a power tool may acquire battery information of a battery pack through communication with the gateway device 50 of the charging station 10 and then determine whether to be powered by the battery pack.

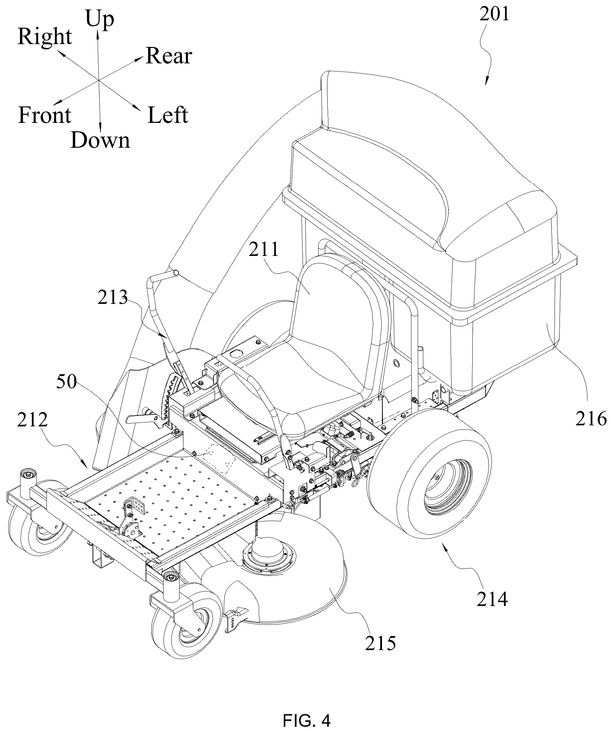

As shown in FIG. 4, the riding mower 201 may be for the user to sit on to control the mower to walk and mow a lawn or vegetation in a more comfortable manner. The riding mower 201 includes a seat 211 mounted to a machine body 212 and used for the user to sit on. In this example, the riding mower 201 includes an operating assembly 213, and the operating assembly 213 may include a lever, a steering wheel, a pedal, or an operation screen for the user to operate to control the riding mower 201 to advance, reverse, turn, or stop. The riding mower 201 further includes a walking wheel group 214, a walking electric motor (not shown) for driving the walking wheel group 214 to walk, a mowing assembly 215, and a driving electric motor (not shown) for driving the mowing assembly 215. In this example, the riding mower 201 further includes an energy storage device 216 mounted to the machine body 212 to supply power to the riding mower 201, and the energy storage device 216 specifically includes one or more battery packs. The battery packs may be fixedly mounted in the machine body 212 or detachably mounted to the machine body 212. For example, the battery pack may be fixed to the machine body 212 through welding, a screw connection, a snap-fit, or another non-movable connection. Alternatively, the battery pack is mounted to the machine body 212 in an insertable and removable manner. For example, a housing of the battery pack is provided with a battery pack interface that enables the battery pack to be mounted to the machine body 212 in an insertable and removable manner, and correspondingly, the machine body 212 is provided with a tool interface docking with the battery pack interface. In other examples, the riding mower 201 may be mounted with both a fixed battery pack and a detachable battery pack. A connection manner of the battery pack mounted to the riding mower 201 and the number of mounted battery packs are not limited in the present application.

In this example, the riding mower 201 further includes the gateway device 50, and the gateway device 50 is connected to the riding mower 201 in a wired connection manner or a wireless connection manner, or the gateway device 50 has both a wired connection and a wireless connection to the machine body 212. In this example, the gateway device 50 on the riding mower 201 may be a 4G gateway, a mobile phone gateway, a Bluetooth gateway, or a Wi-Fi gateway. The gateway device 50 may be disposed on the seat 211, below the seat, on the rear side of the seat, on the front side of the seat, on a handle of the seat 211, or at any position of the machine body 212 that facilitates the plugging and unplugging by the user.

As shown in FIG. 2, the riding mower 201 may establish, through the gateway device 50, communication connections with the push mower 20c and the string trimmer 20a which belong to garden tools as the riding mower 201, thereby implementing data interaction. For example, when the riding mower 201, the push mower 20c, and the string trimmer 20a are operated by different users to simultaneously work on the same lawn, working modes or working parameters of all devices working on the lawn may be set through the gateway device 50 on the riding mower 201, for example, mowing termination information is sent to the string trimmer 20a or information for changing a high mowing speed is sent to the push mower 20c through the gateway device 50. Similarly, the push mower 20c or the string trimmer 20a may feed back working information (for example, information about a trimmed region) to the riding mower 201 through the gateway device 50, so as to prevent the riding mower 201 from repeated mowing in the trimmed region. In this example, data interaction between the string trimmer 201 and the push mower 20c may also be performed through the gateway device 50. It is to be understood that the gateway device 50 may be mounted on the push mower 20c or the string trimmer 20c. In some examples, the riding mower 201 may upload its own working data or received working parameters of other power tools to the cloud server through the gateway device 50.

It is to be understood that data interaction between tool devices in another working scene may also be performed through the gateway device on any power tool. For example, the gateway device 50 is mounted on one power tool of a blower, a table saw, or a wall sander in the same workshop so that all power tools that can establish communication connections with the gateway device 50 in the workshop can perform data interaction with each other through the gateway device 50.

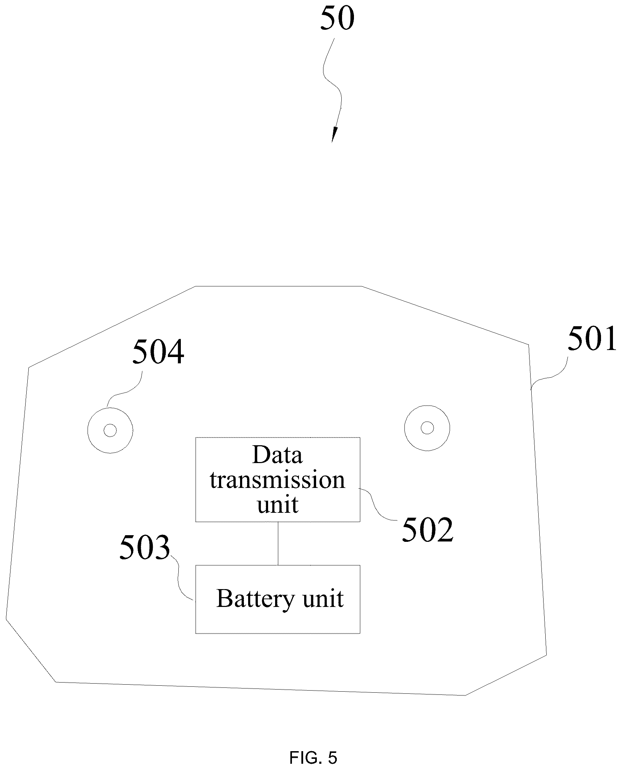

As shown in FIG. 5, the gateway device 50 may include a housing 501, a data transmission unit 502, and a battery unit 503. The data transmission unit 502 may also be referred to as a communication module and is configured to receive communication data and send communication data. The battery unit 503 is configured to supply power to the gateway device 50, and the battery unit 503 may be a rechargeable battery or a button battery in the housing 501. The gateway device 50 in this example is applied to the preceding tool system. For example, the gateway device 50 may be fixed to any power tool, be mounted on the charging station, or exist independently. In an optional example, after the gateway device 50 is mounted to the power tool 20 or the charging station 10, the battery unit 503 may be charged by the battery in the power tool 20 or charged by the charging station 10. It is to be understood that the gateway device 50 may further include a mounting interface 504 which may specifically include a mounting structure (not shown) disposed on the housing 501 and a communication interface (not shown) communicatively connected to the riding mower 201. The communication interface may be integrated into the mounting structure or independent of the mounting structure.

The gateway device 50 performs data interaction with the power tool 20 and/or the cloud server 30 through the data transmission unit 502. That is to say, the gateway device 50 may perform data interaction with the power tool 20, may perform data interaction with the cloud server 30, or may simultaneously perform data interaction with the power tool 20 and the cloud server 30. In this example, the gateway device 50 may establish a communication connection with the power tool 20 in a wired connection manner or a wireless connection manner to perform data interaction. Alternatively, the gateway device 50 may establish communication connections with the power tool 20 in both the wired connection manner and the wireless connection manner. For example, the gateway device 50 interacts with the power tool 20 about first-type data through a wired connection and interacts with the power tool 20 about second-type data through a wireless connection. The first-type data is different from the second-type data. For example, the first-type data includes a device type or device parameter of the gateway device 50 and a tool parameter of the power tool 20, and the second-type data includes a working parameter of another power tool received by the gateway device 50 or may further include tool upgrade data delivered by the cloud server 30. In an example, the gateway device 50 may deliver communication data to the power tool 20 or the charging station 10 may upload data to the cloud server 30, that is to say, the gateway device 50 has an uplink communication link and a downlink communication link.

In this example, the gateway device 50 may perform wireless communication through at least one network of Bluetooth, a cellular network, a local area network, Wi-Fi, or the like. The gateway device 50 may perform wired communication through at least one of a USB Type-C connection or a bus connection.

In an example, different types of gateway devices 50 have different data transmission rates. In an example, different types of gateway devices 50 have different data transmission distances, where a transmission distance may be understood as a signal coverage range of the gateway device 50. In an example, a data transmission rate of the gateway device 50 is greater than or equal to 2 kbps and less than or equal to 200 Mbps. In an example, the gateway device 50 may have different data transmission rates over an uplink and a downlink. In an example, the gateway device 50 has different data transmission rates through the wired connection and the wireless connection.

In an example, a data transmission rate at which the gateway device 50 performs data interaction through the cellular network is greater than or equal to 50 Mbps and less than or equal to 150 Mbps. For example, the data transmission rate of the gateway device 50 over the cellular network is 55 Mbps, 60 Mbps, 75 Mbps, 80 Mbps, 90 Mbps, 100 Mbps, 120 Mbps, 110 Mbps, 130 Mbps, or 140 Mbps.

In an example, a data transmission rate at which the gateway device 50 performs data interaction through Bluetooth is greater than or equal to 1 kbps and less than or equal to 10 kbps. For example, the data transmission rate of the gateway device 50 through Bluetooth is 2 kbps, 4 kbps, 5 kbps, 6 kbps, 7 kbps, 8 kbps, or 9 kbps.

In an example, a data transmission rate at which the gateway device 50 performs data interaction through the local area network is greater than or equal to 100 Mbps and less than or equal to 150 Mbps. For example, the data transmission rate of the gateway device 50 over the local area network is 100 Mbps, 120 Mbps, 110 Mbps, 130 Mbps, or 140 Mbps.

In an example, a data transmission distance over which the gateway device 50 performs data interaction through Bluetooth is greater than or equal to 50 m and less than or equal to 150 m. For example, the data transmission distance may be 60 m, 70 m, 80 m, 90 m, 100 m, 110 m, 120 m, 130 m, or 140 m.

In an example, a data transmission distance over which the gateway device 50 performs data interaction through the local area network is greater than or equal to 50 m and less than or equal to 200 m. For example, the data transmission distance may be 60 m, 70 m, 80 m, 90 m, 100 m, 110 m, 120 m, 130 m, 140 m, 150 m, 160 m, 170 m, 180 m, or 190 m.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A charging station, comprising:
a charging station body comprising:
a housing; and
a bus interface disposed on the housing; and
the charging station further comprising:
a gateway device with a wired connection and/or a wireless connection to the charging station body;
wherein the charging station performs data interaction with a power tool through the gateway device and/or the bus interface; and
the charging station performs data interaction with a cloud server through the gateway device.

2. The charging station according to claim 1, wherein the gateway device is disposed outside the charging station body.

3. The charging station according to claim 1, wherein the gateway device is built into the charging station body.

4. The charging station according to claim 1, wherein the wired connection comprises a USB Type-C connection.

5. The charging station according to claim 1, wherein the wireless connection comprises at least one of a Bluetooth connection, a cellular network connection, a local area network connection, or a Wi-Fi connection.

6. The charging station according to claim 1, wherein data interaction between the gateway device and the power tool is implemented through at least one communication network of Bluetooth, a cellular network, a local area network, or Wi-Fi.

7. The charging station according to claim 1, wherein the gateway device is charged by the charging station.

8. The charging station according to claim 1, wherein the charging station body comprises a gateway interface configured to connect the gateway device.

9. The charging station according to claim 8, wherein the gateway interface is disposed at a front end, a rear end, an upper end, a lower end, a left end, or a right end of the charging station body.

10. The charging station according to claim 8, wherein the charging station body further comprises an interface guard cover coverable to hide the gateway interface.

11. The charging station according to claim 1, wherein the charging station body is provided with a display interface capable of displaying at least a connection state between the gateway device and the charging station body.

12. The charging station according to claim 8, wherein the charging station body is fixed to a fixing surface through a mounting interface, and the gateway interface is coplanar with the mounting interface.

13. The charging station according to claim 1, wherein output power of the charging station is greater than or equal to 1600 W.

14. A wheeled power tool, comprising:
a tool body; a walking wheel group configured to support the tool body;
a walking electric motor configured to drive the walking wheel group to walk;
an energy storage device mounted to the tool body and configured to supply electrical energy to at least the walking electric motor; and
a gateway device;
wherein the tool body has a wired connection and/or a wireless connection to the gateway device;
the wheeled power tool performs data interaction with a power tool through the gateway device; and
the wheeled power tool performs data interaction with a cloud server through the gateway device.

15. The wheeled power tool according to claim 14, wherein the gateway device is powered by the energy storage device.

16. The wheeled power tool according to claim 14, wherein the gateway device is built into the tool body.

17. The wheeled power tool according to claim 14, wherein the gateway device is disposed outside the tool body.

18. The wheeled power tool according to claim 14, wherein the gateway device is detachably and externally connected to the tool body.

19. The wheeled power tool according to claim 14, wherein the gateway device supports at least one of a Bluetooth communication protocol, a cellular network communication protocol, a local area network communication protocol, or a Wi-Fi communication protocol.

20. The wheeled power tool according to claim 14, wherein the tool body is provided with a gateway interface configured to connect the gateway device.

21. The wheeled power tool according to claim 20, wherein the gateway interface is disposed on the tool body.

22. The wheeled power tool according to claim 20, wherein an interface guard cover is further provided at the gateway interface, and the interface guard cover is coverable to hide the gateway interface.

23. A gateway device applicable to a power tool system, wherein the power tool system comprises a power tool or a cloud server, and the gateway device comprises:
a housing;
a data transmission unit disposed in the housing; and
a battery unit disposed in the housing to supply power to the data transmission unit;
wherein the gateway device performs, through the data transmission unit, data interaction with at least the power tool in a wireless manner and/or a wired manner and data interaction with the cloud server in a wireless manner; and
the gateway device is capable of adaptively adjusting a data transmission speed according to a relevant parameter of the power tool.

24. The gateway device according to claim 23, wherein a data transmission rate of the gateway device is greater than or equal to 2 kbps and less than or equal to 200 Mbps.

25. The gateway device according to claim 23, wherein a wired connection comprises at least one of a USB Type-C connection or a bus connection.

26. The gateway device according to claim 23, wherein a wireless connection implements data interaction through at least one communication network of Bluetooth, a cellular network, a local area network, or Wi-Fi.
